Europäisches Patentamt

European Patent Office

Office européen des brevets

(19)

(11) Publication number: **0 374 103**
**A2**

## EUROPEAN PATENT APPLICATION

(21) Application number: **89830438.1**

(22) Date of filing: **13.10.89**

(51) Int. Cl.⁵: **D06M 17/06, A41D 27/06**

The title of the invention has been amended (Guidelines for Examination in the EPO, A-III, 7.3).

(30) Priority: **11.11.88 IT 2261188**

(43) Date of publication of application:
**20.06.90 Bulletin 90/25**

(84) Designated Contracting States:
**AT BE CH DE ES FR GB GR LI LU NL SE**

(71) Applicant: **FISI FIBRE SINTETICHE S.p.A.**
**Via Milano, 53**
**I-22059 Robbiate (Como)(IT)**

(72) Inventor: **Siniscalchi, Lucio**
**FISI FIBRE SINTETICHE S.p.A. Via Milano, 53**
**I-22059 Robbiate (Como)(IT)**

(74) Representative: **Cicogna, Franco**
**Ufficio Internazionale Brevetti Dott.Prof.**
**Franco Cicogna Via Visconti di Modrone,**
**14/A**
**I-20122 Milano(IT)**

(54) **Method for making a wadded fabric.**

(57) The present invention relates to a method for making a wadded fabric for cloth articles, furnishings articles and the like, characterized in that it comprises the step of coupling, to a fabric layer, a wadding layer, with the interposition of an adhesive material layer which provides a bond which can be removed by vaporizing, washing, a mechanical processing and the like.

Fig. 1

EP 0 374 103 A2

# A METHOD FOR MAKING A WADDED FABRIC FOR CLOTH ARTICLES, FURNISHINGS ARTICLES AND THE LIKE

## BACKGROUND OF THE INVENTION

The present invention relates to a method for making a wadded fabric for cloth articles, furnishings articles and the like.

As is known, for making wadded cloth articles, furnishings articles and the like, the fabric is conventionally cut to the desired size and shape and, then, a wadding layer is applied to the thus cut fabric.

Attempted methods for providing a fabric directly coupled to the wadding layer have not provided satisfactory results, since the cloth or the like article made starting from a pre-wadded fabric has poor aesthetic characteristics because of the great surface defects affecting such a material.

## SUMMARY OF THE INVENTION

Accordingly, the aim of the present invention is to solve the above mentioned problem, by providing a method for making a pre-wadded fabric which can be easily used for making cloth articles, furnishings articles and the like, devoid of any aesthetic defects affecting conventionally the so-called coupled fabrics.

Within the scope of the above aim, a main object of the present invention is to greatly reduce the cloth or the like article making time, thereby providing aesthetic cloth articles having a very reduced costs.

Another object of the present invention is to provide such a coupled fabric which can be easily used for an industrial production of cloth articles and in which the fabric and wadding can be easily separated after having made the cloth article.

According to one aspect of the present invention, the above mentioned aim and objects, as well as yet other objects, which will become more apparent hereinafter, are achieved by a method for making a wadded fabric, for making cloth articles, furnishings articles and the like, characterized in that said method comprises the step of coupling to a fabric layer a wadding layer with the interposition of an adhesive material layer, said adhesive material layer being adapted to provide a bond which can be removed by vaporizing, washing, a mechanical processing and the like.

## BRIEF DESCRIPTION OF THE DRAWINGS

Further characteristics and advantages of the invention will become more apparent from the following detailed description of a preferred, though not exclusive, embodiment of a method for making a wadded fabric, for preparing cloth and the like articles, which is illustrated with reference to the accompanying drawings, where:

Figure 1 is a schematic view showing a fabric coupled to a wadding layer;

Figure 2 shows the coupled fabric which has been properly cut for preparing, for example, a cloth article;

Figure 3 shows the made cloth article, which has been vaporized so as to separate the fabric from the wadding layer;
and

Figure 4 is a schematic cross-sectional view showing the fabric separated from the wadding layer, after having made the cloth article.

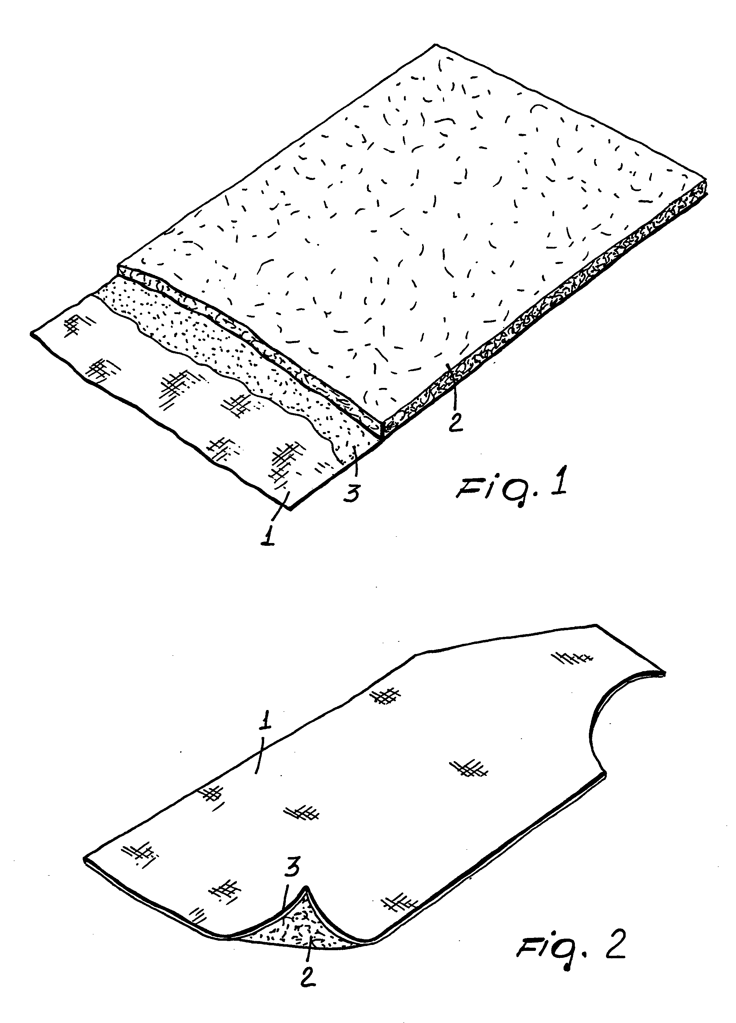

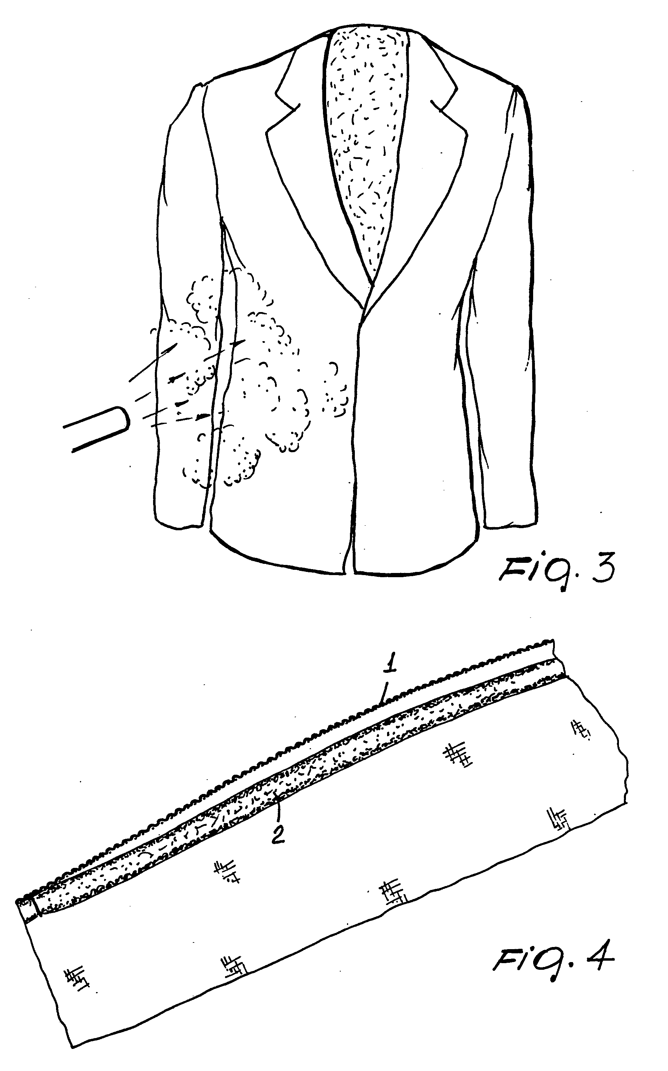

## BRIEF DESCRIPTION OF THE PREFERRED EMBODIMENT

With reference to the figures of the accompanying drawings, the wadded fabric according to the invention, consists substantially of a fabric layer or sheet 1, which can be of any suitable types, even if, preferably, there are used cotton fabrics of different weavings, deniers and finishings, of the gabardine, velved types and the like, either printed or not, which, by means of a surface processing, are up-graded so as to assume the hand and aspect properties of high value fabrics, while having a very reduced cost.

To the the fabric 1 there is coupled a wadding layer, indicated at the reference number 2, which, advantageously, consists of a lap of synthetic siliconized polyester fibres which have been treated on a surface by a soft resin in a water dispersion and, on the other surface, with a water dispersion resin having elasticizing properties.

This sythetic fibre lap is subjected, after drying and cross-linking, to a calendering process, which provides in the wadding a plurality of air pockets, having very high thermal insulation properties and in the meanwhile a very reduced weight from 60 to 120 $g/m^2$.

More specifically, the wadding layer 2 is coupled to the fabric 1 by means of an adhesive material layer 3 which has the main feature of being removable as it will become more apparent hereinafter; such an adhesive material can be of the water dispersion type or of the water solution type.

The coupling of the wadding layer 2 and fabric 1 can be made in a dry condition, by calendering or by means of suitable glues, by lamination.

The calendering dry process is performed by calendering the fabric and wadding layer in a calender ing machine, of the type conventionally used in the textile industry, under temperature and pressure controlled conditions, more specifically at a temperature from 50 to 100° C and a pressure from 10,000 to 20,000 kg and with a speed from 5 to 20 m/sec.

In the laminating process, to the wadding layer, or to the fabric, there is applied, preferably by spraying or spreading, an adhesive layer, of the water dispersion or water solution type, which is subjected, either before or after drying, to a laminating step carried out by rollers, with the fabric and wadding layer in a not spreaded or sprayed condition.

Most suitable adhesive materials are acrylic auto-adhesive materials, in a water dispersion, such as, for example, Primal PS83D of the Company Rohm and Haas, which are modified by polyvinyl alcohol, polyvinylpyrolydone, for example of the type known on the market with the trademark Luviskol K90 of the Company Basf.

Other types of adhesive materials are the self-adhesive materials based on polyvinylmethylether, in a water solution, such as, for example, Lutonal M40 of Basf, modified by polyvinyl alcohol, polyvinylpyrolydone; vinylpyrolydone-vinylacetate copolymers for example of the type known on the market with the trademark Luviskol Vap of the Basf.

The adhesive materials, formulated as above indicated, are sensible to water and heat and, accordingly, the weak bond established between the wadding layer and fabric can be easily removed, both by a vaporizing treatment and, during an ironing operation and by a washing treatment, or by means of a simple mechanical treatment.

In some exemplary embodiments of the inventive method, has been used a cotton fabric, of the ribbed velvet type, with a weight of 150 g/m², and a wadding having a weight of 100 g/m²; the fabric has been calendered at a temperature of 70° C and a pressure of 15,000 kg, a speed of about 10 m/minute; under these processing conditions it has been found that the detachment force of the temporary bond was of about 5-15 g/cm.

In another exemplary embodiment of the method, has been used a fabric of cotton of the gabardine type, with a weight of 120 g/m², and the fabric was been coupled to a wadding layer having a weight of 100 g/m², and, as adhesive, has been used Primal PS83D, in a like amount of water, thereby providing a milky liquid; the detachment force has been found to be of 25 g/cm.

In yet another practical Example, there has been used a cotton fabric of the gabardine type having a weight of 120 g/m² coupled to a wadding layer having a weight of 100 g/m², and the adhesive material layer consisted of 70 parts of Primal PS83D and 30 parts of Poval VPO50 by weight, mixed in a like amount of water; the detachment force was of 15 g/cm.

In yet another Example, by using a gabardine cotton fabric with a weight of 120 g/m² and a wadding layer with a weight of 100 g/m², an adhesive material layer has been applied consisting of 100 parts of Lutonal M40, 100 parts of Poval UPO50 in 100 parts of water, providing a slightly yellow soluton with a detachment force of 10 g/cm.

By applying to a gabardine cotton fabric having a weight of 120 g/m² a wadding layer having a weight of 100 g/m², an adhesive material layer has been used consisting of 100 parts of Lutonal M40, 100 parts of Luviskol K30 and 100 parts of water; in this case, the detachment force was of 19g/cm.

As it should be apparent from the above disclosed Examples, it is possible to make a coupled fabric having a very weak bond between the fabric and the wadding layer, which bonding force is sufficient to hold the fabric and wadding coupled during the fabric cutting operations and cloth article making operations, but such as to allow for the bond to be easily removed after making the cloth article.

Thus, a cloth article will be obtained which has the typical aesthetic aspect of the cloth articles made by means of separated elements.

While the invention has been disclosed and illustrated with reference to a preferred embodiment thereof, it should be apparent that the disclosed embodiment is susceptible to many modifications and variations all of which will come within the spirit and scope of the appended Claims.

## Claims

1. A method for making a wadded fabric, for preparing cloth articles, furnishings articles and the like, characterized in that said method comprises the step of coupling, to a fabric layer, a wadding layer with the interposition of an adhesive material layer adapted to provide a bond which can be removed by vaporizing, washing, a mechanical processing and the like.

2. A method according to Claim 1, characterized in that said fabric layer is coupled to said wadding layer by means of a dry calendering coupling step.

3. A method according to the preceding Claims, characterized in that said dry calendering coupling step is carried out under temperature and pressure controlled conditions, at a temperature from 50 to 100°C and a pressure on the calendering cylinder from 10,000 to 20,000 kg and with a calendering speed from 5 to 20 m/minutes.

4. A method according to one or more of tee preceding Claims, characterized in that said fabric layer is coupled to said wadding layers by means of glueing materials applied by a laminating step.

5. A method according to Claim 4, characterized in that said glueing materials are applied by sprying or spreading and are laminated either before or after drying, by means of rollers, with the fabric and wadding layer in a not spread or sprayed condition

6. A method according to one or more of the preceding Claims, characterized in that said adhesive materials consist of acrylic adhesives in a water dispersion, modified by polyvinyl alcohol, or polyvinylpyrolydone.

7. A method according to one or more of the preceding Claims, characterized in that said adhesive materials are based on polyvinylmethylether in a water solution, modified by polyvinyl alcohol, polyvinylpyrolydone vinylpyrolydone-vinylacetate copolymers.

8. A method for making a wadded cloth articles, furnishings article and the like, characterized in that said method comprises the steps of: coupling a wadding layer to a fabric layer with the interposition of an adhesive material layer, cutting the coupled fabric according to the desired configurations, carrying out the cloth or the like article preparing steps, removing the bond between the wadding layer and fabric layer by means of vaporizing, washing or a mechanical processing.

Fig. 1

Fig. 2

Fig. 3

Fig. 4